# EUROPÄISCHE PATENTSCHRIFT

(11) **EP 0 584 541 B1**
(45) Veröffentlichungstag und Bekanntmachung des Hinweises auf die Patenterteilung: **17.09.1997**
(21) Anmeldenummer: 93111828.5
(22) Anmeldetag: 24.07.1993
(51) Int. Cl.: B62D 21/18, B60R 19/26

(54) **Chassis für Lkw**
Chassis for commercial vehicle
Châssis pour véhicule utilitaire

(30) Priorität: 26.08.1992 DE 4228314
(43) Veröffentlichungstag der Anmeldung: 02.03.1994
(73) Patentinhaber: MAN Nutzfahrzeuge Aktiengesellschaft, 80976 München (DE)
(72) Erfinder: Rühmann, Gerd, Dipl.-Ing., D-82205 Gilching (DE); Drewitz, Hans, Dipl.-Ing., D-80797 München (DE)

(56) Entgegenhaltungen:
- EP-A- 0 287 278
- WO-A-81/02999
- BE-A- 746 115
- CH-A- 240 334
- DE-A- 4 103 782
- FR-A- 1 581 592
- FR-A- 2 398 654
- US-A- 1 697 386
- US-A- 4 163 578

## Beschreibung

Die Erfindung bezieht sich auf einen Lastkraftwagen, insbesondere Frontlenker der schweren Gewichtsklasse, bestehend aus einem Vorderwagen und einem mit diesem verbundenen Hinterwagen und mit einer Tragstruktur zur Abstützung des Antriebsaggregates, der Rad- und Achsanlenkungen, des Fahrerhauses und der Auf-/Anbauten.

Lastkraftwagen herkömmlicher Bauart, insbesondere solche der schweren Gewichtsklassen, sind in der Regel so aufgebaut, daß zwei Rahmenlängsträger mit Rahmenquerträger verbunden sind und solcherart den Tragrahmen bilden, wobei die Rahmenlängsträger bis an den vorderen Stoßfänger herangeführt werden und mit einem abschließenden Querträger und dem Stoßfänger verbunden sind. Der Fahrzeugantrieb und die Kühlanlage sind dabei zwischen den Rahmenlängsträgern angeordnet.

Im vorderen Fahrzeugbereich müssen eine Vielzahl von Aggregaten an die Rahmenkonstruktion adaptiert werden, z. B. das Lenkgetriebe, die Fahrerhauslagerung, die Kühler-Lüfter-Anlagen, die vorderen Federn und die Motorlagerung usw. Umfangreiche Installationen sind in diesem Fahrzeugbereich ebenfalls erforderlich. Da die Rahmenkonstruktion verwindungsweich gestaltet sein soll, müssen sämtliche Querträger sowie Halte- und Befestigungsböcke der Anbauaggregate angenietet bzw. angeschraubt werden, da Schweißen nicht zulässig ist.

Das beschriebene Nutzfahrzeugkonzept hat gravierende Nachteile:

Da sich unter dem Antriebsblock stets der ein- und ausfedernde Achskörper befindet, muß bei einer gegebenen Bodenfreiheit der Motor-Getriebe-Block relativ hoch im Fahrzeug angeordnet werden. Als Folge ragt der Motor weit über den Bodenraum des Fahrerhauses hinaus und beengt somit besonders bei kurzen Fahrerhäusern den Innenraum. Bei kürzeren Fahrerhäusern ragen Kupplungsblock und Schaltgetriebe des Antriebs nach hinten aus dem Fahrerhaus heraus und beeinträchtigen den Fahrzeugaufbau wesentlich. Die Ladefläche hinter dem Fahrerhaus im Fahrzeughinterteil wird also letztlich von der hohen Einbaulage des Antriebsblockes bestimmt.

Da die Kühler-Lüfter-Anlage zwischen den Rahmenlängsträgern angeordnet ist, die Größe der erforderlichen Kühlnetzfläche jedoch nicht verringert werden kann, muß bei der bisherigen Nutzfahrzeug-Konfiguration das Kühler-Lüfter-Aggregat ebenfalls in den Bodenraum des Fahrerhauses hineinragen.

Der Erfindung liegt die Aufgabe zugrunde, ein Fahrzeug ohne die beschriebenen Nachteile zu schaffen, das eine flexible Anpassung hinsichtlich Rahmen und Aufbauvariationen von Kundenwünschen ermöglicht, bei einer verbesserten, kostengünstigen Fertigung und Montage.

Dies wird erfindungsgemäß dadurch erreicht, daß die gegebenenfalls auch angetriebenen Vorderräder einzeln aufgehängt, über Doppelquerlenker geführt sowie über Luftfederbeine abgestützt sind, daß ferner der Boden des Fahrerhauses zumindest im Fußbereich vor Fahrer- und Beifahrersitz im wesentlichen eben ausgebildet ist und daß die Tragstruktur aus drei miteinander verbundenen Teilen besteht, nämlich, einem aus Rohren und/oder Profilen und/oder Blechpreßteilen zusammengesetzten, käfigartigen Zentraltragwerk, in dem das Antriebsaggregat gelagert, an dem die Einzelradaufhängungs- und Federungsorgane der Vorderräder angeschlossen und der hintere Abschnitt des Fahrerhauses abgestützt sind, einem bügelförmigen Vorderrahmen, der im Vorderbereich des Lastkraftwagens angeordnete Teile einschließlich den vorderen Abschnitt des Fahrerhauses trägt und einem mit Auf-/Anbauten verbindbaren, dem Hinterwagen zugehörigen Rahmenlängsträgerverband, wobei der Vorderrahmen mit der Vorderseite des Zentraltragwerkes verbunden und Letzteres vorne am Rahmenlängsträgerverband in variabler Höhe anschließbar ist. Solcherart können an dem immer einheitlichen Vorderwagen unterschiedliche Hinterwagen auch mit unterschiedlicher Höhe des Rahmenlängsträgerverbandes adaptiert werden. Indem eine moderne Einzelradaufhängung mit Doppelquerlenkerführung und Federbein verwendet wird, und sich somit kein aus- und einfedernder Achskörper unter dem Motorblock befindet, kann der Antriebsblock deshalb vorteilhaft tief im Fahrzeug angeordnet werden, so daß der Fahrerhausboden sehr tief abgesenkt und zumindest von Tür zu Tür eben ausgebildet werden kann, wodurch sich, die Raumverhältnisse im Fahrerhaus erheblich verbessern. Die wesentlichen Kräfte am Vorderwagen, wie Radführungs- und Federkräfte werden weitgehend momentenfrei in das Zentraltragwerk eingeleitet. Weiterhin ist auch das Lenkgetriebe direkt am Zentraltragwerk angebracht, so daß die Lenkkräfte ohne Umlenkhebel in die Haupttragstruktur eingeleitet werden. Im Gegensatz zur herkömmlichen Fahrzeug-Konzeptionen hat die erfindungsgemäße Befestigung des Lenkgetriebes am Zentraltragwerk den Vorteil, daß die Lenkkräfte am Ort ihrer Entstehung im Radbereich direkt abgestützt werden. Herkömmliche Fahrzeugkonzepte haben Lenkgetriebe im vorderen Fahrzeugbereich, so daß die Lenkkräfte über zusätzliche Lenkstangen auf das Lenkgetriebe übertragen werden müssen. Die in die Achsebene vorgezogene Anordnung des Lenkgetriebes hat noch weitere Vorteile:

Wenn energieabsorbierende Maßnahmen, z. B. ein Vorder-Unterfahrschutz vorgesehen werden, so steht bei herkömmlicher Anordnung des Lenkgetriebes im vorderen Fahrzeugbereich dieses einer sinnvollen Funktion des Unterfahrschutzes entgegen. Das Lenkgetriebe wirkt hier als Hart-Unterfahrschutz. Diese Zone ist aber bei der Anordnung des Lenkgetriebes gemäß der Erfindung frei, so daß ein Weich-Unterfahrschutz seine volle Wirkung entfalten kann. Das Zentraltragwerk ist weiterhin so ausgebildet, daß es besonders gut zur Kräfteabstützung einer Doppelquerlenker-Achsführung geeignet ist. Eine Ausgestaltung des Zentraltragwerks in Rohrkonstruktion umfaßt und stützt den Antrieb oben und unten ab, wie auch Federbeine, Dreiecklenker und Lenkgetriebe.

Der bügelförmige Vorderrahmen ist lösbar oder nicht lösbar an dem Zentraltragwerk befestigt. Er kann entsprechend den jeweiligen Erfordernissen gestaltet werden, so ist eine Aufspreizung der Seitenteile zur Umfassung eines breiten Wasserkühlers möglich. Da sich die Hauptkräfte des Vorderwagens am Zentraltragwerk abstützen, wird die Vorderwagenstruktur nur noch von relativ geringen Kräften belastet, so z. B. partiell von Kräften der vorderen Fahrerhauslagerung oder gelegentlich von Kräften an der vorderen Abschleppkupplung.

In einer besonderen Ausbildung kann die Tragkonstruktion an einem Lastwagen mit Allradantrieb weitergehend so ausgebildet sein, daß der Vorderachsantrieb, von einem Nebenabtrieb des Schaltgetriebes beaufschlagt, mittels Laschen am Motorblock befestigt ist, wobei der Mitteneingangstrieb seitlich der Ölwanne angeordnet ist und die Ölwanne im Bereich des Gehäusedurchtritts einer Seitenwelle des Vorderachsantriebes engstmöglich ausgemuldet ist. Für diese Ausführung gelten sämtliche vorbeschriebenen Merkmale gleichermaßen. Weitere Vorteile ergeben sich durch die aufgrund der erfinderischen Merkmale mögliche Ausbildung des Vorderradantriebes mit tiefgezogener Antriebseinheit, wobei die Übertragung des Drehmomentes zur Vorderachse wie folgt verläuft:

Neben dem bekannten Abtrieb zur Hinterachse ist das Schaltgetriebe mit einem zusätzlichen Abtrieb zur Vorderachse versehen. Dieser Abtrieb beinhaltet ein Differentialgetriebe und überträgt den gewünschten Drehmomentanteil über eine Gelenkwelle zum Vorderachsantrieb. Der Vorderachsantrieb ist zunächst ein separates Bauteil und besteht aus dem bekannten Mitteneingangstrieb mit Kegelrad- und Differentialgetriebe. Über Steckachsen mit getriebeseitig kreuzgelenkten und radseitig homokinetischen Gelenken erfolgt links und rechts der Radantrieb, wobei eine Übersetzung ins Langsame mit Hilfe radseitiger Planetengetriebe vorgesehen ist. Im Gegensatz zu einer starren Antriebsachse kann das Gehäuse des Vorderachsantriebes relativ leicht ausgeführt werden, da keine Radlast- oder Radführungskräfte abgestützt werden müssen. Um bei gegebener Bodenfreiheit eine möglichst tiefe Motoreinbaulage zu erreichen, wird der Mitteneingangstrieb unten seitlich des Motorgehäuses bzw. der Ölwanne angeordnet. Solcherart wird sichergestellt, daß das Gehäuse einer Seitenwelle unter der tiefstmöglich einziehbaren Stelle des Motors bzw. der Ölwanne zu liegen kommt und nicht das relativ hohe Mitteneingangsgetriebe. Am Durchgang der Seitenwelle mit ihrem Gehäuse durch die Ölwannenzone des Motors, wird diese soweit ausgemuldet, daß der minimal erforderliche Platzbedarf für den Motorkurbeltrieb gewährleistet ist. Der gesamte Vorderradantrieb wird mittels Laschen am Mitteneingangstrieb und am Seitenwellengehäuse mit dem Motorblock verschraubt. Solcherart bildet er mit Motor und Schaltgetriebe einen einheitlichen Antriebsblock. Indem der Vorderachsantrieb nicht im Motor oder der Ölwanne integriert ist, ist eine günstige Fertigung und einfache Montage möglich.

In vorteilhafter Ergänzung der Erfindung kann ein energieverzehrender Stoßfänger vorgesehen werden, der im Kollisionsfall problemlos in den durch die Eigenart der Erfindung frei gewordenen Raum vor dem Zentraltragwerk ausweichen kann.

Die Erfindung ist in einem Ausführungsbeispiel dargestellt und beschrieben.

Es zeigen:
- Fig. 1: einen Vorderwagen mit Tragwerk in der Seitenansicht,
- Fig. 2: einen Vorderwagen mit Tragwerk in der Vorderansicht,
- Fig. 3: einen Vorderwagen mit Tragwerk in der Draufsicht,

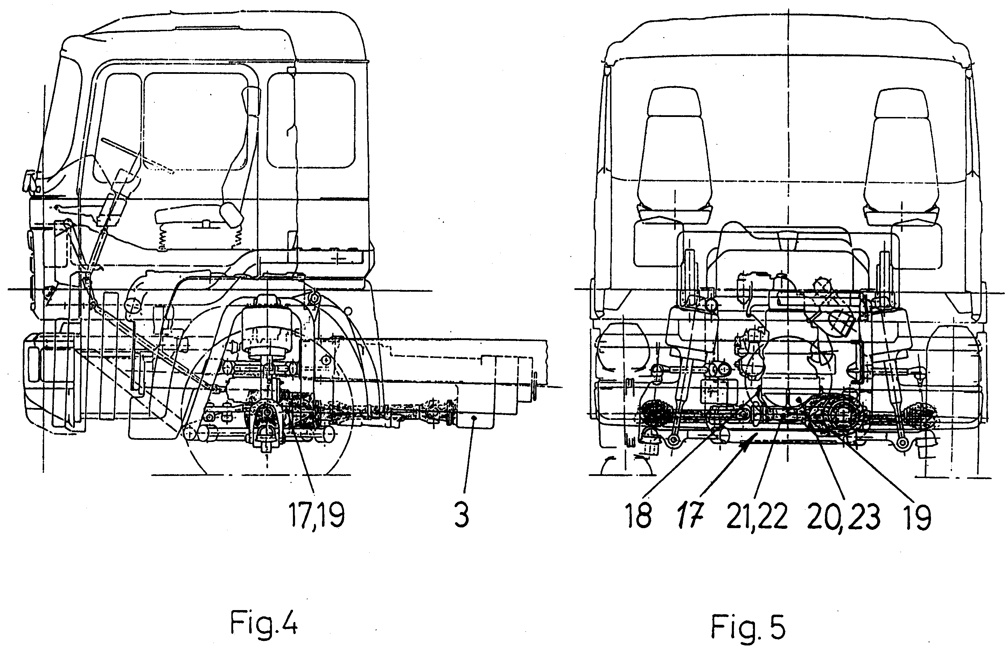

- Fig. 4: eine alternative Ausführung eines Vorderwagens mit Tragwerk in der Seitenansicht,
- Fig. 5: eine alternative Ausführung eines Vorderwagens mit Tragwerk in der Vorderansicht,
- Fig. 6: einen Vertikalschnitt durch die Ebene des Vorderachsantriebes,
- Fig. 7: eine Seitenansicht mit energieverzehrendem Stoßfänger,
- Fig. 8: eine Seitenansicht mit energieverzehrendem Stoßfänger.

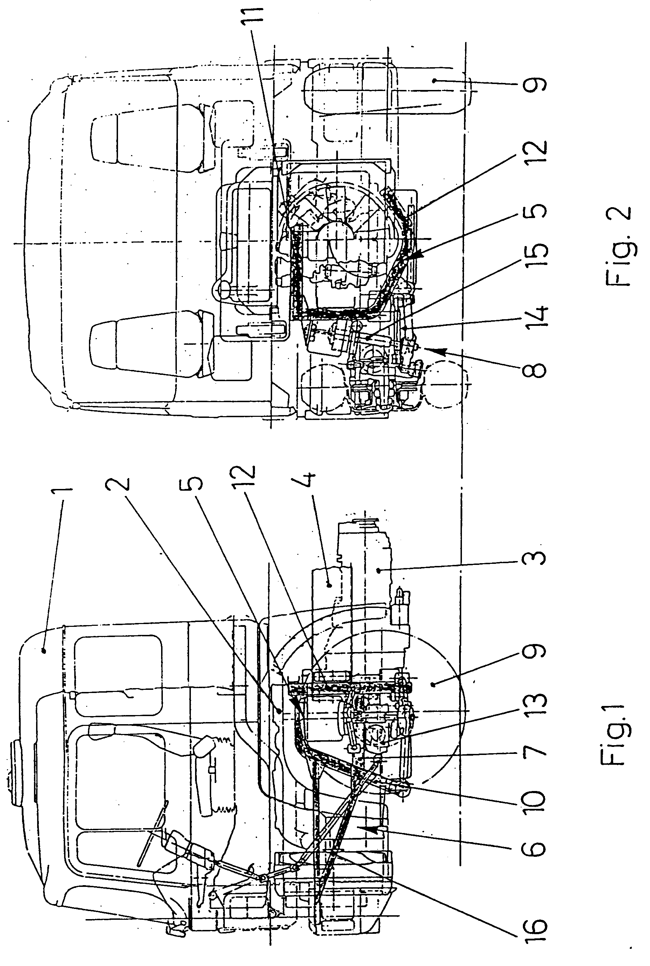

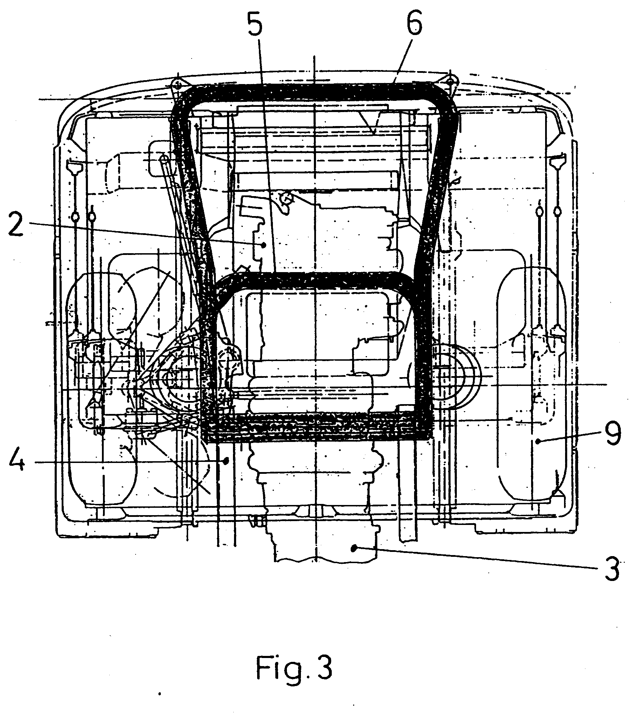

Die Fig. 1, 2 und 3 zeigen den Vorderwagen eines Lastkraftwagens mit einem Zentraltragwerk 5, auf dessen Rückseite ein Rahmenlängsträgerverband 4, der die Aufbauten trägt, als variables Teil in unterschiedlicher Höhe an das Zentraltragwerk lösbar befestigbar ist. Das Zentraltragwert 5 umgreift Motor 2 und Schaltgetriebe 3 und ist im Kernschatten der Antriebsräder 9 angeordnet.

An der Vorderseite des Zentraltragwerkes ist ein bügelförmiger Vorderrahmen 6 angeordnet, dessen Seitenteile 16 als dreieckiger Verband ausgestaltet sind, wobei die Teile von ihrer Anbindung an das Zentraltragwerk zur Bugseite hin in der Breitenerstreckung ausgeweitet sein können, so daß sie auch breite Wasserkühler aufnehmen können. Das Zentraltragwerk 5 ist kiepenförmig ausgebildet, wobei das Hinterteil 12 als umfassender Rahmen dachförmig gestaltet und mit den Seitenteilen 10 fest verschweißt ist. Zur Stabilisierung des Zentraltragwerks 5 sind die Teile 10 und 12 verbindende Querstreben 7 vorgesehen wie auch ein Verbindungsträger 11, der schraubbar das oben offene Hinterteil 12 schließt.

Die Antriebseinheit, bestehend aus Verbrennungsmotor 2 und Schaltgetriebe 3, ist im Zentraltragwerk 5 gelagert. Weiterhin stützen sich am Zentraltragwerk 5 die Antriebsräder 9 über die Doppelquerlenker-Achsführung 14 und die Federbeine 15 ab. Das Lenkgetriebe 13 ist ebenfalls ohne weiteres Umlenkgetriebe direkt am Zentraltragwerk 5 befestigt. Auch das Fahrerhaus 1 stützt sich weitgehend, d. h. mit seinem größeren Anteil am Zentraltragwerk 5 und mit einem kleineren Anteil partiell am bügelförmigen Vorderrahmen 6 ab.

Bei einer alternativen Ausführung eines Lastkraftwagens mit Allradantrieb kommt die erfindungsgemäße Konzeption des Zentraltragwerks ebenfalls zur Anwendung. Der hier vorzusehende Vorderachsantrieb 17 kann in leichter Bauweise ausgeführt werden, da er keine Radlast oder Radführungskräfte zu übertragen braucht. Dahingegen wird Wert darauf gelegt, daß er abmessungsmäßig so gestaltet ist, daß er möglichst nahe an den Boden des Motors bzw. der Ölwanne heranreicht, um auch in dieser Variante den Boden des Fahrerhauses möglichst tiefanordnen zu können.

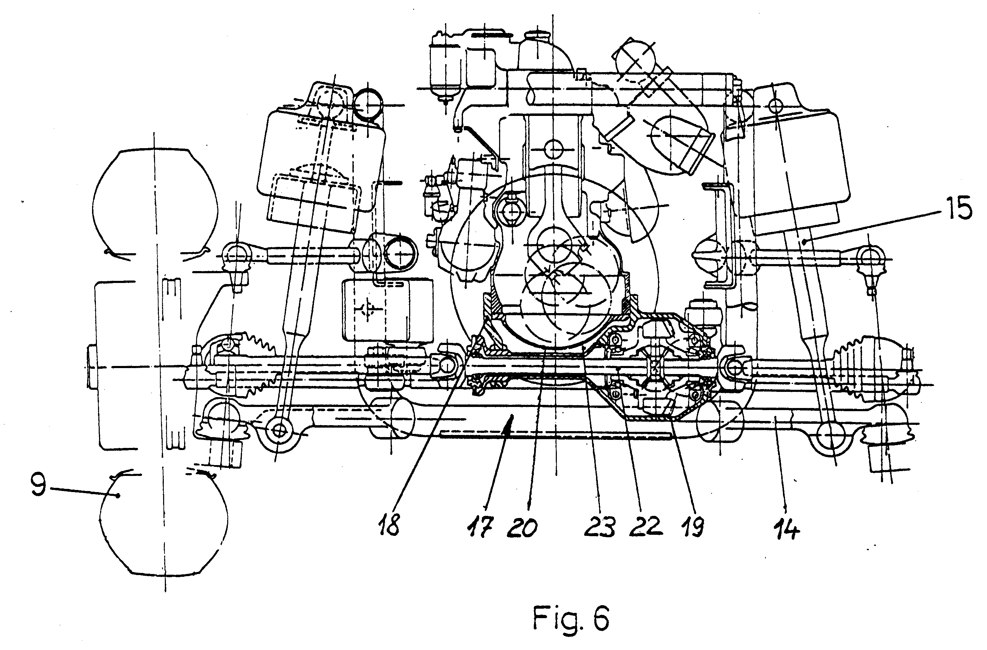

Die Ausgestaltung der Tragstruktur ist im wesentlichen wie in den Fig. 1,2 und 3 beschrieben. Von einem Nebenabtrieb des Schaltgetriebes 3 führt eine Gelenkwelle zu einem mit Kegelrad-Differentialgetriebe versehenen Mitteneingangstrieb 19 des Vorderachsantriebes 17. Der Mittenantrieb 19 - siehe auch Fig. 6 - ist seitlich neben der Ölwanne 20 angeordnet, so daß am tiefsten Punkt des Kurbelwellendurchganges die Ölwanne so ausgemuldet (23) werden kann, daß an dieser Stelle das Gehäuse 21, durch das die Seltenwelle 22 zum linken Rad 9 geführt ist, unter geringstmöglichen Platzbedarf kreuzen kann. Der Vorderachsantrieb 17 ist mittels Laschen 18 am Motorblock des Motors 2 verschraubt.

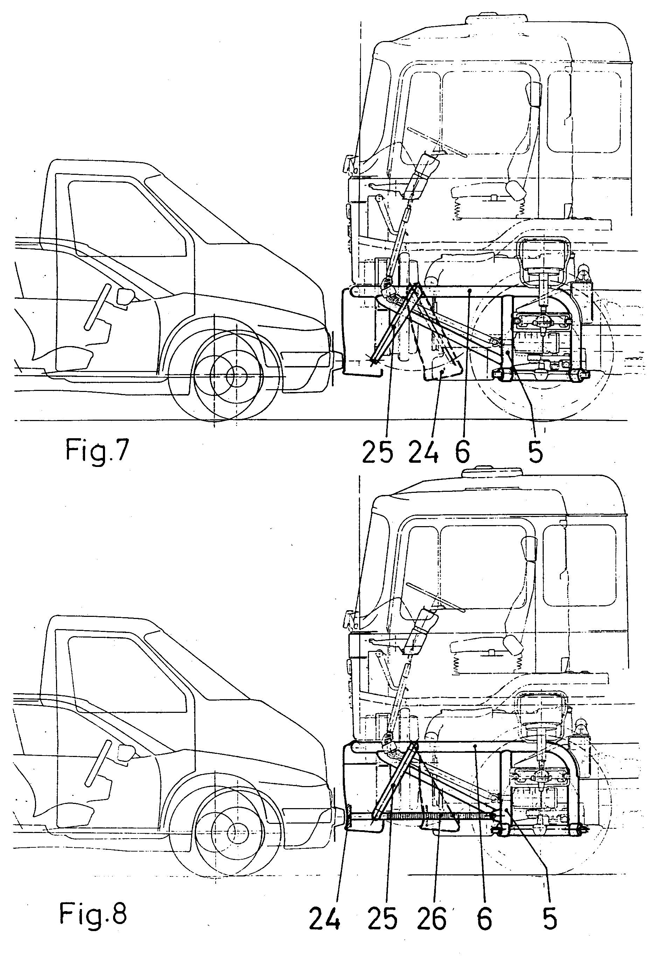

Die Fig. 7 und 8 zeigen einen Stoßfänger 24, der über mindestens zwei Hebel 25 schwenkbar im vorderen Bereich des oberen Vorderrahmenteils gelagert ist. Zur Vernichtung der Aufprallenergie im Kollisionsfall sind die Hebel 25 entweder als Torsionsstäbe ausgebildet, oder sie stützen sich an ihren freien Enden mittels elastischer oder Federelemente 26 gegen das Zentraltragwerk 5 ab. Durch die Eigenart der erfinderischen Ausbildung der Tragstruktur, können lange Hebel mit flachen Kreisbögen beim Ein- und Ausfahren des Stoßdämpfers 24 gewählt werden, wobei auch ein tiefer Eintauchraum gegeben ist.

### Bezugszeichenliste

- 1: Fahrerhaus
- 2: Motor
- 3: Schaltgetriebe
- 4: Rahmenlängsträgerverband
- 5: Zentraltragwerk
- 6: bügelförmiger Vorderrahmen
- 7: Querstrebe
- 8: vorderes Fahrwerk
- 9: Vorderräder
- 10: Seitenteile von 5
- 11: Verbindungsträger
- 12: Hinterteil von 5
- 13: Lenkgetriebe
- 14: Doppelquerlenker-Achsführung
- 15: Federbeine
- 16: Seitenteile von 6
- 17: Vorderachsantrieb
- 18: Laschen
- 19: Mitteneingangstrieb
- 20: Ölwanne von 2
- 21: Gehäuse
- 22: Seitenwelle
- 23: Mulde von 20
- 24: Stoßfänger
- 25: Hebel
- 26: elastische Elemente oder Federelemente

## Patentansprüche

1. Lastkraftwagen, insbesondere Frontlenker der schweren Gewichtsklasse, bestehend aus einem Vorderwagen und einem mit diesem verbundenen Hinterwagen und mit einer Tragstruktur zur Abstützung des Antriebsaggregates, der Rad- und Achsanlenkungen, des Fahrerhauses und der Auf-/Anbauten, dadurch gekennzeichnet,
- daß die gegebenenfalls auch angetriebenen Vorderräder (9) einzeln aufgehängt, über Doppelquerlenker geführt sowie über Luftfederbeine abgestütztsind,
- daß ferner der Boden des Fahrerhauses (1) zumindest im Fußbereich von Tür zu Tür im wesentlichen eben ausgebildet ist, und
- daß die Tragstruktur aus drei miteinander verbundenen Teilen besteht, nämlich
a) einem aus Rohren und/oder Profilteilen und/oder Blechpreßteilen zusammengesetzten, käfigartigen Zentraltragwerk (5), in dem das Antriebsaggregat (2, 3) tief und stehend gelagert, an dem die Einzelradaufhängungs- und Federungsorgane der Vorderräder (9) angeschlossen und der hintere Abschnitt des Fahrerhauses (1) abgestützt sind,
b) einem bügelförmigen Vorderrahmen (6), der im Vorderbereich des Lastkraftwagens angeordnete Teile einschließlich den vorderen Abschnitt des Fahrerhauses (1) trägt und
c) einem mit Auf-/Anbauten verbindbaren, dem Hinterwagen zugehörigen Rahmenlängsträgerverband (4),
wobei der Vorderrahmen (6) mit der Vorderseite des Zentraltragwerkes (5) verbunden und Letzteres vorne am Rahmenlängsträgerverband (4) in variabler Höhe anschließbar ist.

2. Lastkraftwagen nach Anspruch 1, dadurch gekennzeichnet, daß das Zentraltragwerk (5) eine nach unten offene, kiepenartige Form aufweist, wobei die Seitenteile (10) in Trapez- oder U-Form mit dem dachförmigen Hinterteil (12) fest verbunden sind und der Verband durch Querstreben (7) abgestützt ist.

3. Lastkraftwagen nach Anspruch 1 oder 2, dadurch gekennzeichnet, daß das Zentraltragwerk (5) aus Profilrohren oder anderen geeigneten Profilen zusammengeschweißt ist und lediglich der obere Verbindungsträger (11) schraubbar mit dem offenen Hinterteil (12) verbunden ist.

4. Lastkraftwagen nach den Ansprüchen 1 bis 3, dadurch gekennzeichnet, daß am Zentraltragwerk (5) das Lenkgetriebe (13) adaptiert ist, wie auch die Doppelquerlenker-Achsführung (14) und die Federbeine (15) an ihm abgestützt sind.

5. Lastkraftwagen nach einem oder mehreren der Ansprüche 1 bis 4, dadurch gekennzeichnet, daß der bügelförmige Vorderrahmen (6) in seinen Seitenteilen (16) als Dreieckverband ausgebildet ist und sich von seiner Anbindung an das Zentraltragwerk (5) in seiner Breitenerstreckung bis zum Fahrzeugbug hin wahlweise örtlich oder in seiner Breitenerstreckung aufweitet.

6. Lastkraftwagen nach einem oder mehreren der Ansprüche 1 bis 5, dadurch gekennzeichnet, daß an dem bügelförmigen Vorderrahmen (6) ein energieverzehrender Stoßfänger (24) angeordnet ist, der über mindestens zwei Hebel (25) im vorderen Bereich des oberen Vorderrahmenteils schwenkbar gelagert ist, wobei entweder die Hebel (25) selbst als Torsionsstäbe ausgebildet sind oder sich an ihren freien Enden mittels elastischer oder Federelemente (26) gegen das Zentraltragwerk (5) abstützen.

7. Lastkraftwagen nach Anspruch 1 in der Leistungsklasse ≧ 16 t, dadurch gekennzeichnet, daß das Zentraltragwerk (5) soweit nach unten gezogen ist, daß die Höhe der Kurbelwellenachse 620 mm nicht überschreitet

## Claims

1. Trucks, particularly forward-control trucks from the heavy weight range, consisting of a forebody and an afterbody connected with it and with a support structure for supporting the drive unit, the wheel and axle location systems, the cab, superstructures and attachments, characterised in that
• the front wheels (9), which may also be driven, are independently suspended, located via twin control arms and supported via air-sprung struts,
• furthermore the floor of the cab (1) is basically level at least in the foot area from door to door, and
• the support structure consists of three interconnected parts, ie
a) a cage-type central support unit (5) composed of tubes and/or sectional parts and/or sheet metal pressings, in which central support unit (5) the drive unit (2, 3) is supported at a low level and in vertical position, to which drive unit (2, 3) the independent-wheel-suspension and spring organs for the front wheels (9) are connected and on which drive unit (2, 3) the rear section of the cab (1) is supported,
b) a bow-type front frame (6) which carries parts located in the front area of the truck including the front section of the cab (1) and
c) a frame longitudinal member unit (4) which can be connected with superstructures/attachments and is associated with the afterbody,
the front frame (6) being connected with the front side of the central support unit (5) and the latter being able to be connected to the frame longitudinal member unit (4) at the front at variable height.

2. Truck according to Claim 1, characterised in that the central support unit (5) has a scuttle shape with the open end facing downwards, the lateral parts (10) in trapezoidal or U shape being firmly connected with the roof-shaped rear part (12) and the unit being supported by cross struts (7).

3. Truck according to Claim 1 or 2, characterised in that the central support unit (5) consists of sectional tubes or other suitable sectional materials welded together and that only the upper connecting member (11) is connected with the open rear part (12) by means of a screwed connection.

4. Truck according to the Claims 1 to 3, characterised in that the steering gear (13) is adapted to the central support unit (5) on which are also supported the twin control arm axle location (14) and the spring struts (15).

5. Truck according to one or several of the Claims 1 to 4, characterised in that in its lateral parts (16) the bow-type front frame (6) is designed as a triangular unit and optionally extends, locally or in respect of its width extension, from its connection to the central support unit (5) in its width extension to the vehicle front.

6. Truck according to one or several of the Claims 1 to 5, characterised in that an energy-absorbing bumper (24) is connected to the bow-type front frame (6), which bumper (24) is slewably supported via at least two levers (25) in the front area of the upper front frame part, the levers (25) themselves being either designed as torsion rods or supporting themselves at thee free ends on the central support unit (5) via elastic or spring elements (26).

7. Truck according to Claim 1 in the weight range ≧ 16 t, characterised in that the central support unit (5) reaches downwards so far that the height of the crankshaft axis does not exceed 620 mm.

## Revendications

1. Camion, en particulier camion à cabine avancée appartenant à la classe des poids lourds, constitué d'un avant-train relié à un arrière-train et d'une structure porteuse supportant le groupe propulseur, les articulations des roues et des essieux, la cabine de conduite et les éléments additionnels et de carrosserie,
caractérisé en ce que
• les roues avant (9), éventuellement motrices, sont suspendues de manière indépendante par l'intermédiaire de doubles triangles et de jambes élastiques à air,
• le plancher de la cabine (1), au moins dans la zone des pieds, est essentiellement plane d'une porte à l'autre,
• la structure porteuse est constituée de trois parties reliées, à savoir :
a) une cellule porteuse centrale (5) en forme de cage formée par un assemblage de tubes et/ou de pièces en tôle emboutie, à l'intérieur de laquelle le groupe propulseur (2, 3) est monté fixe et bas, et sur laquelle s'appuient les organes constituant les suspensions indépendantes des roues avant (9) ainsi que la partie arrière de la cabine (1),
b) un avant-châssis (6) en forme d'étrier, portant les éléments situés tout à l'avant du véhicule, y compris la partie avant de la cabine (1),
c) un assemblage de longerons de châssis (4) appartenant à l'arrière-train du véhicule et pouvant être relié aux éléments additionnels et de carrosserie, l'avant-châssis (6) étant relié à la partie avant de la cellule porteuse centrale (5) qui peut elle-même être rattachée à l'assemblage (4) à une hauteur variable.

2. Camion selon la revendication 1,
caractérisé en ce que
la cellule porteuse centrale (5) a la forme d'une hotte ouverte vers le bas, dont les flancs (10) ayant la forme d'un trapèze ou d'un U sont solidaires de la partie arrière (12) en forme de toit, tandis que l'assemblage est en appui par l'intermédiaire d'entretoises diagonales (7).

3. Camion selon la revendication 1 ou 2,
caractérisé en ce que
la cellule porteuse centrale (5) est constituée d'un assemblage soudé de tubes profilés ou autres pièces profilées, le support supérieur de liaison (11) étant simplement relié par des vis à la partie arrière ouverte (12).

4. Camion selon les revendications 1 à 3,
caractérisé en ce que
le boîtier de direction (13) est adapté à la cellule porteuse centrale (5) comme le sont également le guidage d'essieu (14) à doubles barres de direction et les jambes élastiques (15).

5. Camion selon une des revendications 1 à 4,
caractérisé en ce que
l'avant-châssis (6) en forme d'étrier a ses parties latérales (16) constituées d'assemblages triangulaires qui, partant de leur liaison à la cellule porteuse centrale (5) s'écartent l'un de l'autre vers l'avant, localement ou en général, au choix.

6. Camion selon une ou plusieurs des revendications 1 à 5,
caractérisé en ce que
sur l'avant-châssis (6) en forme d'étrier, se trouve un pare-chocs absorbeur d'énergie, monté à l'avant de l'avant-châssis, par l'intermédiaire d'au moins deux leviers (25) de basculement, ces leviers étant eux-mêmes constitués de barres de torsion ou s'appuyant à leurs extrémités libres, sur la cellule porteuse centrale (5) par l'intermédiaire d'éléments élastiques ou à ressorts (26).

7. Camion selon la revendication 1 de charge utile égale ou supérieure à 16 t,
caractérisé en ce que
la cellule porteuse centrale (5) est suffisamment basse pour permettre à l'axe de vilebrequin de ne pas se trouver à une hauteur supérieure à 620 mm.
